# EUROPEAN PATENT SPECIFICATION

(11) **EP 1 268 930 B1**
(45) Date of publication and mention of the grant of the patent: **09.09.2009**
(21) Application number: 01907595.1
(22) Date of filing: 09.02.2001
(51) Int. Cl.: D21H 19/36, D21H 19/38, D21H 19/40

(54) **Method for making a coating composition**
Verfahren zur Herstellung einer Beschichtungszusammensetzung
Procédé de fabrication de composition de revetement

(30) Priority: 11.02.2000 FI 20000296
(43) Date of publication of application: 02.01.2003
(73) Proprietor: BASF SE, 67056 Ludwigshafen (DE)
(72) Inventor: TEIRFOLK, Jan-Erik, FIN-20320 Turku (FI); KIMPIMÄKI, Tomi, FIN-21250 Masku (FI)
(86) International application number: PCT/FI2001/000123
(87) International publication number: WO 2001/059215

(56) References cited:
- EP-A2- 0 365 502
- WO-A1-98/54409
- US-A- 5 120 365
- US-A- 5 439 707
- US-A- 5 605 568

## Description

The present invention relates to a method for making coating composition defined in the preambles of the independent claims.

The object in coating a paper web, paperboard or the like is among other things to form a smooth surface on the web, which is suitable for e.g. printing or other post-processing. Often an object of the coating can also be to provide an impermeable surface, which forms a barrier for the passage of water, oil, steam or the like.

A coating of this kind is typically provided by a pigment mix, which is formed by mixing at least a mineral material, such as calcium carbonate, kaolin, titanium dioxide, gypsum, talc and/or another corresponding material used as a pigment, and a binding agent, such as synthetic polymer, latex and/or another corresponding binding agent. The proportion of the mineral material in the pigment mix is typically > 80 % of the dry solids. On the other hand, there are known pigment mixes, where the proportion of the binding agent is very high, even 40 to 45 %. Further the pigment mix contains typically different additives, such as agents used to control rheology or pH, cross-linking agents, curing agents, etc.

When pigment mixes known as such are used e.g. in the coating of printing paper, then it is generally necessary to coat the paper with one, two or even more relatively thick coating layers in order to obtain the desired effect.

However, even thick pigment mix layers do not always provide the desired barrier effect A conventional pigment mix contains a very high amount, typically more than 80 %, mineral material, which is formed by pigment particles. Therefore, such a mix is not impermeable, and thus it is not necessarily able to prevent in a desired way the passage of water or other liquids in the coating. A liquid brought upon the coated surface can penetrate between the mineral particles into the base paper. Correspondingly, when using this mix in a surface precoating, the liquid contained in the coating, or any other liquid brought upon the surface coated with this coating can penetrate between the mineral particles of the precoating and deep into the precoating, possibly even into the base paper. This has a negative effect on the coating quality, and in some cases it may increase the consumption of some other coating. In addition both the coating and the base paper get wet, in which case the drying of the moisture absorbed into them consumes time and energy.

A coating made of a conventional pigment mix allows for instance the printing ink to penetrate deep into the coating, in which case ink and liquid is absorbed into the coating and possibly into the base paper, at a higher rate than the printing in question would require. The print quality will suffer, and the printing ink consumption is very high. Further, the drying of the absorbed liquid consumes time and energy.

A pigment mix containing large amounts of mineral material is often used also for precoating paper before the actual surface coating made during further processing. Then the actual surface coating or liquid contained therein, such as silicone used in the coating of release paper, can penetrate deep into the pigment mix layer if the coating layer does not form a sufficiently impermeable barrier. Thus, it is necessary to use excessive amounts of coating material. Then a problem is also raised by the fact that the coating material is easily absorbed differently at different locations, in other words unevenly, in which case the end-result will suffer.

As the running speeds of paper and paperboard machines increase it is also necessary to increase the running speeds of the coating units. It should be possible to make the desired coating with thinner coating layers than previously, so that the drying of the layers could be faster compared to thick layers. However, the coating should be sufficiently impermeable, i.e. it should provide a sufficient barrier effect, which prevents unnecessary penetration of liquid into the coating and the base paper or paperboard.

Often it would be desirable to be able to form the required liquid barrier on the surface in a surface sizing unit arranged in connection with a paper machine. However, generally these devices are able to form only thin coating layers, typically about 1 to 3 g/m², which are too thin to provide a sufficient liquid barrier with conventional known pigment mixes.

Previously it is known to use talc in the pigment mixes in order to improve the liquid barrier. It is known that due to the slate-like or plate-like structure of talc it will form labyrinth-like passages in the coating layer, which allow the liquid to pass only slowly through the coating layer. However, it may be very cumbersome to make a talc-containing mix in the coating kitchen in a paper or paperboard mill. Typically the mixing of talc into a binder requires a large amount of dispersing agents, wetting agents and additives in order to succeed. The dispersing agents are usually water soluble, in which case the use of a dispersing agent in large amounts may make the coating partly soluble in water, in which case it will poorly withstand water.

EP-A2-0 365 502 (closest prior art for claim 1) discloses a method for preparing a pigment mix to be used in the coating of a paper web, in which method a water slurry is prepared containing talc and at least one other component of the coating mix such as calcined clay or calcined talc. The invention is characterized by first dispersing talc into a water slurry and thereafter mixing the second component of the coating mix in dry form into the talc slurry prepared in the first stage.

The Finnish patent FI 102401 has previously proposed the making a transparent coating with a reduced permeability of very clean talc particles and a polymer. The coating is particularly well suited for the coating of paper or paperboard, for packing purposes. The proportion of talc particles in the coating is very high, 30 to 80 % of the dry solids content. The coating presented in the patent publication may therefore be too impermeable for the purpose of coating for instance printing paper. An impermeable surface may prevent for instance printing ink or an adhesive agent from penetrating into the coating, even by the required amount. Also other post-processing may in some cases become inconvenient.

The coatings should be able to provide a surface having a barrier characteristic suitable for the respective purpose.

Thus the object of the present invention is to provide an improved coating composition, which minimises the disadvantages of the coating compositions presented above.

An object is also to provide a new method for making a coating composition.

A further object is particularly to provide a coating composition, which even as a relatively thin layer is able to provide both the desired smooth surface and an impermeable surface, in other words a barrier against the passage of liquid, which is suitable for the respective purpose.

It is also an object is to provide a coating composition, which can be tailored to suit different requirements.

A particular object is to provide a coating composition having an adjustable barrier effect.

A further object is to provide a method for changing the composition of a pigment mix known as such, so that its barrier effect regarding moisture is improved.

In order to attain the objects presented above the present invention is characterised in what is defined in the characterising parts of the independent claim 1.

A coating composition may thus be made by mixing together for example
- a first mineral-containing pigment mix suspension known as such, which is formed by mixing together at least
   - a first mineral material, such as calcium carbonate, kaolin, titanium dioxide, gypsum, talc and/or another corresponding material used as a pigment, and
   - a first binding agent, such as a synthetic polymer, latex and/or the like, and
- a second different mineral-containing pigment mix suspension, which is made by mixing together
   - a second mineral material, which mainly comprises talc particles and/or other phyllosilicate particles, and
   - a second binding agent, such as a synthetic polymer, latex and/or another corresponding binding agent.

In the composition presented above the second pigment mix is mainly formed by talc particles and a binding agent, combining the particles, whereby the binding agent can be for instance
- a polymer, which as its main component contains styrene or butadiene,
- a polymer, which as its main component contains monomers, which monomers contain an acryl group or an allyl group, for instance
   - an n-, iso- or tert-alkyl ester of acrylic acid or of metacrylic acid, where the alkyl group comprises 1 to 20 carbon atoms,
   - a diester of acrylic acid or metacrylic acid and ethylene glycol or propylene glycol (as a cross-linking component),
   - allyl glycidyle ether or diaceton acrylamide (as a cross-linking component), or
   - 2-acrylamido-2-methylpropane-sulphonic acid (as a component increasing the ionisation)
and/or
- a polymer, which as its main component contains vinyl ester monomers, such as vinyl acetate, vinyl propionate, vinyl butyrate, vinyl bentzoate, vinyl-2-ethylene-hexanoate, vinyl stearate and vinyl ester of versatine acid.

The monomers can further contain acid groups or ester groups, or they can be amides of acrylic acid or of metacrylic acid, or their derivatives.

The binding agent can be biodegradable. Biodegradable binding agents include for instance polymers based on starch, lactic acid or polyhydroxibutyrate/valerate, or polyesters of different organic di- or tri-acids together with divalent or polyvalent alcohols. Said acids may include for instance adipine acid, maleine acid or citric acid, and the alcohols may include for instance ethylene glycol, propylene glycol, or neopentyle glycol, or pentaerythritol or glycerol.

The proportion of the second mineral-containing pigment mix in the produced coating is between 10 and 80 % ds (of the dry solids content), advantageously between 25 and 60 % ds. The first pigment mix is typically a pigment mix, which is known as such and found acceptable regarding its other characteristics except for the barrier effect, and which has a mineral material content of 75 to 97 % ds, often 80 to 95 % ds. In some special cases, the proportion may be even lower, but nevertheless higher than 55 %. The mineral matter content in the second pigment mix is generally much lower, i.e. 20 to 80 %, advantageously 30 to 70 %, in which case the proportion of the talc particles in this mineral material is generally at least 50 %, typically > 90 %. The proportion of talc particles in the mineral material of the final coating, or in the combined first and second mineral materials, is then generally at least 10 to 70 %, typically 20 to 60 %. The particle size of the talc particles is in 90 % of the cases advantageously < 40 µm. More than 50 % of the talc particles have typically a particle size of < 10 µm.

The coating is made, depending on the mixes and/or the equipment, either by mixing the second pigment mix into the first pigment mix, by mixing the first pigment mix into the second pigment mix, or by mixing each pigment mix in turns into a common vessel. When the pigment mixes are mixed together there is generally no need for dispersing agents or stabilising agents, or they are needed in an amount less than 5 %.

In addition to the mineral material and the binding agent also other materials can be added to the pigment mixes, such as small amounts of a dispersing agent, an anti-foaming agent, an agent controlling the pH, a wetting agent, a wax, a colouring agent, a stearate, a cross-linking agent etc, which agents are known as such and have been found advantageous regarding the making or the use of pigment mixes. When required, in addition to the talc particles, also some other pigment or mineral material can be added to the second pigment mix, such as calcium carbonate, kaolin, titanium dioxide, gypsum or some organic pigment. This second pigment is then added at most 50 %, typically < 20 %.

The second pigment mix is used to replace such an amount of the first pigment mix that the water barrier effect of a coating layer with the thickness of 5 to 8 g/m² provided by the coating composition is the same or better than the water barrier effect provided by a coating layer with a thickness of 10 g/m² made of merely the first pigment mix.

A coating composition according to the invention can provide a precoating of a web, such as paper, paperboard or the like, the precoating providing the web with an impermeable surface, which reduces the absorption of water or other liquids, such as printing ink, into the web during further-processing.

Advantageously the coating composition can also be used for coating release paper in order to create an impermeable coating on the base paper, which coating reduces the water absorption from silicon coating into the web.

Now it has surprisingly been found, that by adding even relatively small amounts of a second pigment mix according to the invention to a pigment mix, which is known as such and which contains a high proportion of mineral particles, the barrier characteristics of this known pigment mix can in an easy manner be increased, without any substantial changes in the runnability of the machine.

It is surprising, that by adding even relatively small amounts of talc particles, particularly in paste form, we can obtain a substantially better barrier effect of a paste coating, which is known as such and which contains a large amount of mineral particles. It could have been assumed that the abundant mineral particles could settle between the talc particles and thus reduce the barrier effect created by them.

By mixing into a pigment mix known as such a second pigment mix, which improves the barrier characteristics, it is possible with a thinner coating layer to reach the same, or in practice almost the same result as by using only a conventional pigment mix, in which case it is often possible to make the coating also in a surface sizing unit.

Below some examples of the making of the second pigment mix according to the invention are presented. In the description the materials are shown as amounts of dry solids content, if not otherwise stated.

### Example 1

Talc, either as a powder or granulate, is suspended in water according to the following formula:
- 1585.6 g water, 4.1 g sodium polyacrylate and 16.2 g sodium carboxymethylcellulose are measured into a dispersing vessel.
- Talc is gradually added in to the mixture, in total about 2700.0 g. High rotational speeds are used in the dispersing.
- Halfway through the feeding of talc 4.1 g sodium polyacrylate and 2.4 g sodium hydroxide are further added.
- The dispersing vessel is provided with a cooling jacket, and cooling of the suspension is initiated when 20 minutes has passed from the ending of the talc feeding step.
- Then the mixture is dispersed for another 20 minutes.

This gives a talc suspension having a dry solids content of 63.0 % and a viscosity of 200 mPas, as measured with a Brookfield LVT viscometer, with the measuring head nr 3, at a rotational speed of 100 r/min. A talc-containing pigment mix is obtained by mixing the talc suspension into polymer latex. This pigment mix is immediately or later combined with another pigment mix, which is known as such and which contains minerals, in order to make a coating composition according to the invention.

### Example 2

Talc, either as a powder or granulate, is suspended in polymer latex according to the following formula:
- 181.1 g water, 1700.0 g styrenebutadiene-based polymer latex (dry solids content 50 %, vitrification point +20 °C), 3.4 g sodium hydroxide and 1.7 g organomodified siloxane are measured into a dispersing vessel.
- Talc is gradually added in to the mixture, in total about 1700.0 g. High rotational speeds are used in the dispersing in order to decompose talc agglomerates.
- The dispersing vessel is provided with a cooling jacket, and cooling of the suspension is initiated when 20 minutes has passed from the ending of the talc feeding step.
- Then the mixture is dispersed for another 20 minutes.

This gives a talc-containing pigment mix having a dry solids content of 68.0 % and the viscosity 1150 mPas, as measured with a Brookfield LVT viscosimeter, with the measuring head nr 4, at a rotational speed of 100 r/min. This talc-containing pigment mix is immediately or later combined with another pigment mix, which is known as such, in order to make a coating composition according to the invention.

Measurement results representing porosity and barrier characteristics of different coating compositions according to the invention are presented below. The porosity of the coating was determined by using Bendtsen measurement ISO 5636/3. The penetration of water into the coating was measured by Cobb 300 measurement, ISO 535. A measurement representing the penetration of oil was made with a CobbUnger10 measurement, SCAN P37:77. For the measurement, a sample was made by coating 100 g/m² paper with a layer of the examined coating having a thickness of 9 to 10 g/m².

In the study coatings were examined, which were made by combining different amounts of pigment mixes known as such, in other words by combining the mixes A, B or C, with a pigment mix R containing talc. The ratio of the mix known as such (A, B or C) to the talc-containing mix, was 100/0, 80/20, 60/40, 20/80 or 0/100.

The composition of the pigment mixes is given below. The amount means the material's proportion of the rock material, which is always 100.

The composition of the pigment mix A was

| Amount | Active compound | Brand name |
|---|---|---|
| 100 | Carbonate | HC 60 |
| 15 | Latex | Raisional B 740 |
| 0.5 | CMC | Finfix 30 |
| 0.2 | Cross-linking agent | Azcote |

| | | |
|---|---|---|
| The acidity of the mix was adjusted with ammonia to pH = 9. The dry solids content was 64 %. | | |

The composition of the pigment mix B was

| Amount | The active compound | Brand name |
|---|---|---|
| 60 | Carbonate | HC 90 |
| 40 | Kaolin | HG 90 |
| 13 | Latex | Raisional 212 |
| 0.8 | CMC | Finfix 30 |
| 0.8 | Ca-stearate | Raisacoat |
| 0.5 | Cross-linking agent | Azcote |

| | | |
|---|---|---|
| The acidity of the mix was adjusted with ammonia to pH = 8.5. The dry solids content was 64.5 %. | | |

The composition of the pigment mix C was

| Amount | Active compound | Brand name |
|---|---|---|
| 100 | Carbonate | HC 60 |
| 15 | Latex | Raisional 1125 |
| 0.5 | CMC | Finfix 10 |
| 0.2 | Cross-linking agent | Azcote |

| | | |
|---|---|---|
| The acidity of the mix was adjusted with ammonia to pH = 9. The dry solids content was 64 %. | | |

The composition of the pigment mix R was

| Amount | Active compound |
|---|---|
| 100 | Talc |
| 50 | Latex |
| 3 | Other |

| | |
|---|---|
| The acidity of the mix was adjusted with ammonia to pH = 8. The dry solids content was 57 %. | |

The following table gives the ratio of the amount of mix A, B or C to the amount of the mix R, the water penetration (g/m²) according to Cobb 300, the oil penetration (g/m²) according to CobbUnger10, and the porosity (ml/min) according to Bendtsen.

**Table 1**

| Ratio | Cobb 300 | CobbUnger10 | Bendtsen |
|---|---|---|---|
| A1= A/R = 100/0 | 54.3 | 8.4 | 7 |
| A2= A/R = 80/20 | 46.9 | 3.9 | 5 |
| A3= A/R = 60/40 | 35 | 3.6 | 4 |
| A4= A/R = 20/80 | 25.1 | 3.3 | 3.5 |
| A5=A/R=0/100 | 5 | 1 | 3 |
| B1= B/R = 100/0 | 59.6 | 3.2 | 5 |
| B2= B/R = 80/20 | 55.1 | 2.5 | 4 |
| B3= B/R = 60/40 | 49.7 | 1.8 | 2 |
| B4= B/R = 20/80 | 18.3 | 1.1 | 2 |
| B5= B/R =0/100 | 5 | 1 | 2 |
| C1= C/R = 100/0 | 57.5 | 4.9 | 6 |
| C2= C/R = 80/20 | 56.1 | 2.5 | 4 |
| C3= C/R = 60/40 | 54.1 | 1.7 | 4 |
| C4= C/R = 20/80 | 27.4 | 1.2 | 2 |
| C5= C/R = 0/100 | 5 | 1 | 2 |

The values Cobb300, CobbUnger10 and Bendtsen for the different ratios of mix A to mix R in the table above are presented as curves in the enclosure 1. The corresponding values for different ratios of mixes B and C to mix R are presented as curves in the enclosures 2 and 3.

The Cobb300 values for mixes A, B and C as mixed in different ratios with mix R are presented in the enclosure 4. The CobbUnger and Bendtsen values are correspondingly presented in the enclosures 5 and 6.

From the values in the tables and from the curves in the enclosures 1 to 3 it can be seen that already by replacing 20 parts of the mixes A, B or C with the mix R we will obtain substantial changes in the porosity and barrier characteristics of the mix. However, it depends on the characteristics of the basic mixes A, B or C how large an amount of the second mix R is needed to achieve the desired change in the porosity or in the barrier characteristics.

With the solution according to the invention the absorption of water or other liquids of the coating on paper, paperboard or the like can be controlled on a wide scale. The absorption of liquids can be controlled by adjusting the mixing ratio, as shown above, or by adjusting the total amount of mix. The coating according to the invention can be used as a surface coating, but particularly advantageously as a precoating when a double coating is used. In this case the precoating creates a base with suitable barrier characteristics for the actual coating, which can be any suitable mix. Then the touch of the coated surface remains the same, smooth, light, firm, etc, even if a part of the coating has been changed in order to provide better barrier characteristics.

It must be considered as an important advantage of the invention that a talc-containing pigment in sludge form can be very easily mixed into a second sludge, in which case it is possible to combine the positive features of a conventional mix and a talc mix. The proportion of the second pigment mix, which contains minerals, is about 10 to 80 % of the coating composition, but sometimes it can be higher, even 90 to 95 %, if there is no risk that the surface will become too impermeable. When the coating comprises about 25 to 60 % of the second pigment mix a mix composition will be obtained, where generally the positive characteristics of both pigment mixes will manifest themselves. The most advantageous mixing ratio in each case will depend on the mixes and their intended use. The same mixes can be used in different amounts, depending for instance on the desired level of water or oil penetration.

The solution according to the invention makes it possible for that the paper mills to use one so-called basic pigment mix in the coating composition, into which another so-called supplementary or special pigment mix is added, which supplementary or special pigment mix has the desired special characteristic. The basic pigment mix can typically be made in a conventional manner at the paper mill. The special pigment mix may, if desired, be supplied as a ready-made mix e.g. if its consumption is rather small or if the making thereof is more cumbersome.

In the examples presented above mainly a special pigment mix of a certain type has been used, and its effect on permeability to water has been studied. However, a special pigment mix can affect many other characteristics of coated paper, depending on the composition of the mix.

By the mixing of different the coating mixes, i.e. by using a supplementary coating mix, functional characteristics are sought after, such as opacity, optical characteristics, brightness etc. By using a supplementary coating mix various characteristics of the end-product can be affected if necessary, such as printability, stickiness, adhesiveness, heat-sealing qualities etc. Digital printing and different accelerated finishing processes in general increase the demands on the paper coating, which demands the invention according to the invention can meet.

The invention is not intended to be limited to the embodiments presented above, but the intention is to be able to apply it widely within the scope defined in the claims presented below.

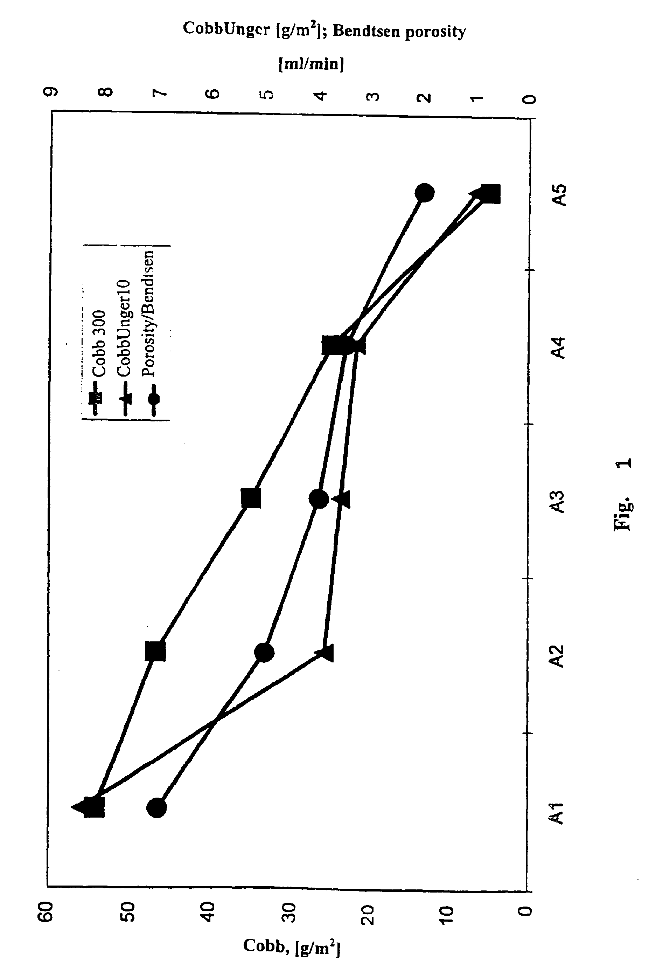

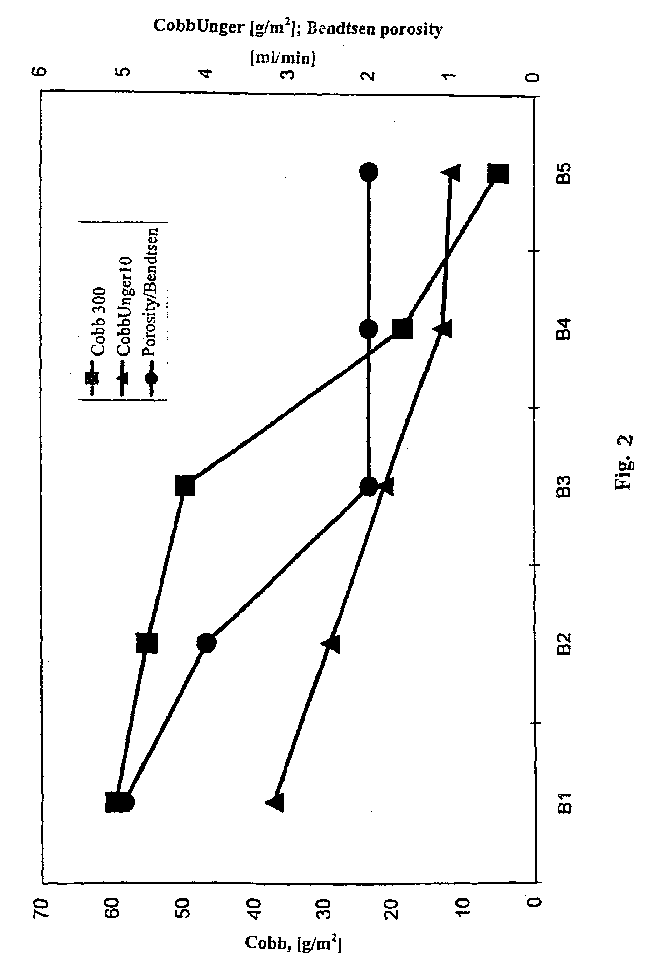

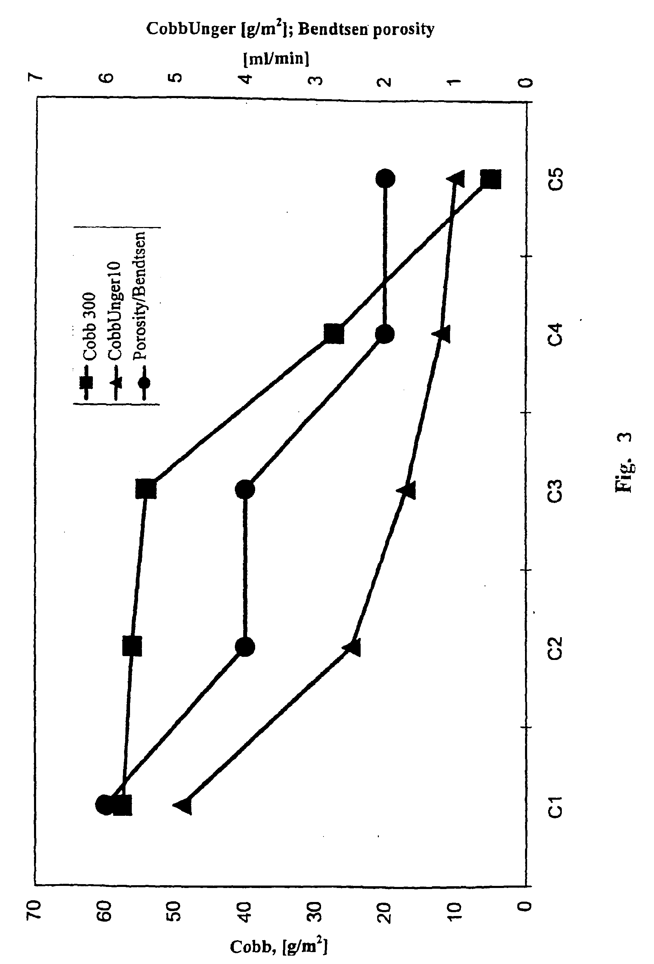

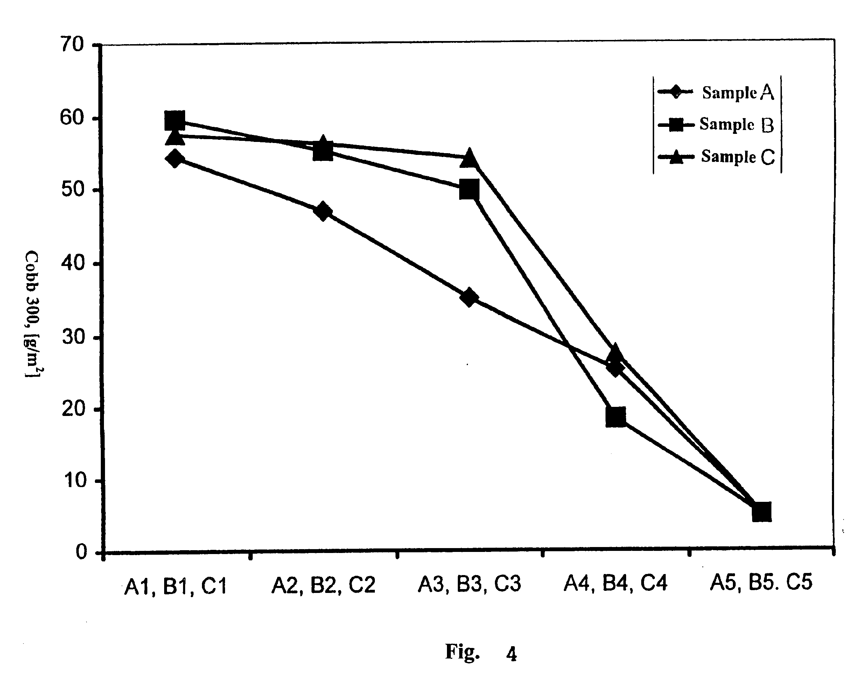

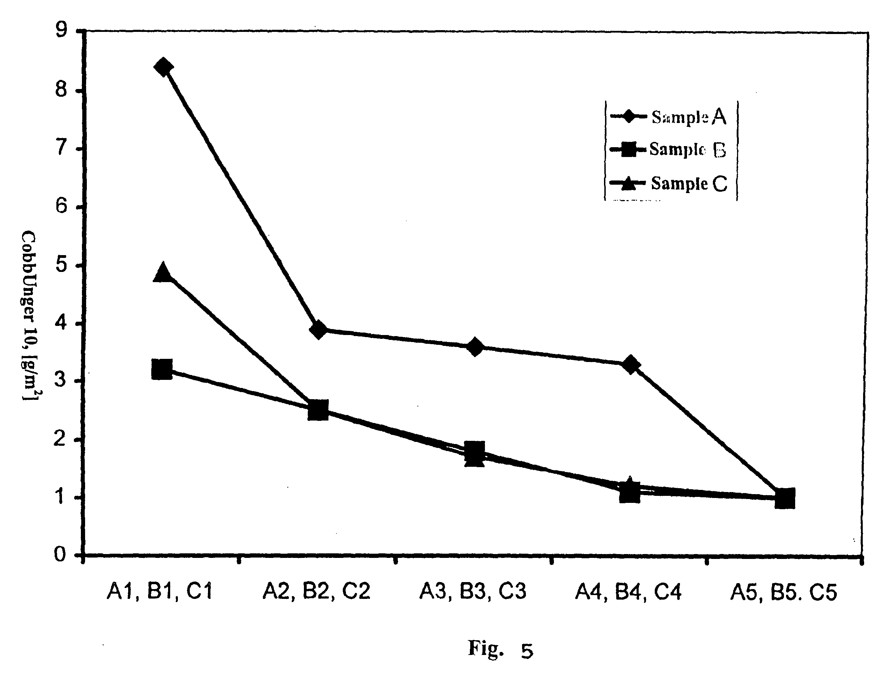

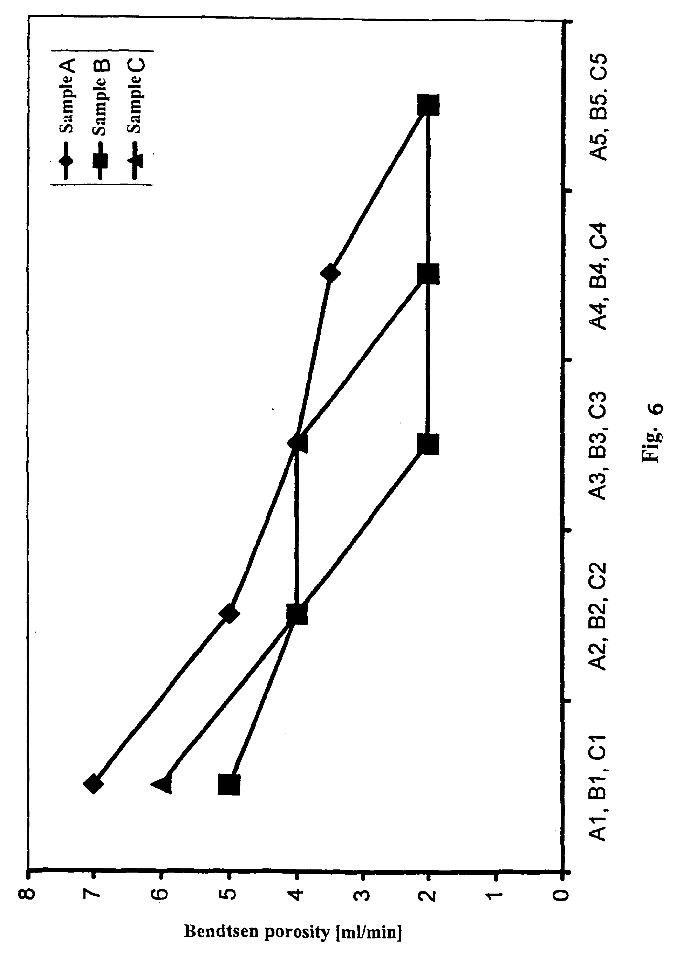

## Claims

1. A method for making a coating composition, in which making
a first pigment mix suspension, which contains mineral material, is prepared by mixing
- a first mineral material, such as calcium-carbonate, kaolin, titanium dioxide, gypsum, talc and/or another corresponding material used as a pigment, and
- a first binding agent, such as synthetic polymer, latex and/or another corresponding binding agent,
and
a second different pigment mix suspension, which contains mineral material, is prepared by mixing
- at least a second mineral material mainly comprising talc particles and/or other phyllosilicate particles and
- a second binding agent
wherein
the above-prepared first and the second pigment mixes are combined in order to form the coating composition.

2. A method according to claim 1, **characterised in that** the first and second pigment mixes are mixed together in order to form a coating composition where the proportion of the second mineral-containing pigment mix in the coating composition is 10 to 80 %, typically 25 to 60 %.

3. A method according to claim 1, **characterised in that** the first and second pigment mixes are mixed together in order to form a coating composition where the proportion of the second mineral material in the second pigment mix is 20 to 80 %, advantageously 30 to 70 %.

4. A method according to claim 1, **characterised in that** the proportion of talc particles of the mineral material in the final coating composition, or in the combined first and second mineral materials, is at least 10 to 70 %, typically 20 to 60 %.

5. A method according to claim 1, **characterised in that** the proportion of the talc particles in the second mineral material of the second pigment mix is at least 50 %, typically > 90 %.

6. A method according to claim 5, **characterised in that** the second mineral material comprises mainly talc particles having a particle size of < 40 µm.

7. A method according to claim 6, **characterised in that** the second mineral material comprises more than 50 % talc particles having a particle size of < 10 µm.

8. A method according to claim 1, **characterised in that** the second binding agent is
- a polymer, which as its main components contains styrene or butadiene,
- a polymer, which as its main components contains monomers, which monomers contain an acryl group or an allyl group, and which are for instance
- an n-, iso- or tert-alkyl ester of acrylic acid or of metacrylic acid, where the alkyl group comprises 1 to 20 carbon atoms,
- a diester of acrylic acid or metacrylic acid and ethylene glycol or propylene glycol (as a cross-linking component),
- allyl glycidyle ether or diacetone acrylamide (as a cross-linking component), or
- 2-acrylamido-2-methylpropane-sulphonic acid (as a component increasing the ionisation)
and which monomers further may contain acid groups or ester groups, or they can be amides of acrylic acid or metacrylic acid, or their derivatives
and/or
- a polymer, which as its main components contains vinyl ester monomers, such as vinyl acetate, vinyl propionate, vinyl butyrate, vinyl bentzoate, vinyl-2-ethylene-hexanoate, vinyl stearate and vinyl ester of versatine acid.

9. A method according to claim 1, **characterised in that** a biodegradable material is used as the second binding agent, which biodegradable binding agents include
- polymers based on starch, lactic acid or polyhydroxibutyrate/valerate, or
- polyesters of different organic di- or tri-acids together with divalent or polyvalent alcohols, whereby said acids include for instance adipine acid, maleine acid and citric acid and the alcohols include for instance ethylene glycol, propylene glycol, and neopentyle glycol, and pentaerythritol and glycerol.

10. A method according to claim 1, **characterised in that** the proportion of the first mineral material in the first pigment mix is 75 to 97 %, typically 80 to 95 % ds.

11. A method according to claim 1, **characterised in that** the second pigment mix replaces such an amount of the first pigment mix that the water barrier effect of a coating layer with the thickness of 5 to 8 g/m² provided by the coating composition is the same or better than the water barrier effect provided by a coating layer with a thickness of 10 g/m² made of merely the first pigment mix.

12. A method according to claim 1 , **characterised in that** the coating composition is made by mixing the second pigment mix into the first pigment mix, the first pigment mix into the second pigment mix, or by mixing each pigment mix in turns into a common vessel.

13. A method according to claim 1 , **characterised in that** the pigment mixes are mixed together using less than 5 % dispersing agents and/or stabilising agents.

## Patentansprüche

1. Verfahren zur Herstellung einer Beschichtungszusammensetzung, bei dem eine erste Pigmentmischungssuspension, die Mineralstoff enthält, hergestellt wird durch Mischen
- eines ersten Mineralstoffes, wie Calciumcarbonat, Kaolin, Titandioxid, Gips, Talk und/oder eines anderen entsprechenden als Pigment verwendbaren Stoffes, und
- eines ersten Bindemittels, wie eines synthetischen Polymers, Latex und/ oder eines anderen entsprechenden Bindemittels,
und
eine zweite verschiedene Pigmentmischungssuspension, die Mineralstoff enthält, hergestellt wird durch Mischen
- mindestens eines zweiten Mineralstoffes, der hauptsächlich Talkpartikel und/oder Phyllosilicatpartikel umfaßt, und
- eines zweiten Bindemittels,
wobei
die oben hergestellten ersten und zweiten Pigmentmischungen kombiniert werden, um eine Beschichtungszusammensetzung zu bilden.

2. Verfahren nach Anspruch 1, **dadurch gekennzeichnet, dass** die ersten und zweiten Pigmentmischungen zusammengemischt werden, um eine Beschichtungszusammensetzung zu bilden, bei der der Anteil der zweiten Mineral enthaltenden Pigmentmischung in der Beschichtungszusammensetzung 10-80 %, typischerweise 25-60 % beträgt.

3. Verfahren nach Anspruch 1, **dadurch gekennzeichnet, dass** die ersten und zweiten Pigmentmischungen zusammengemischt werden, um eine Beschichtungszusammensetzung zu bilden, bei der der Anteil des zweiten Mineralstoffes in der zweiten Pigmentmischung 20-80 %, vorteilhafterweise 30-70 % beträgt.

4. Verfahren nach Anspruch 1, **dadurch gekennzeichnet, dass** der Anteil der Talkpartikel des Mineralstoffes in der endgültigen Beschichtungszusammensetzung oder in den kombinierten ersten und zweiten Mineralstoffen mindestens 10-70 %, typischerweise 20-60 % beträgt.

5. Verfahren nach Anspruch 1, **dadurch gekennzeichnet, dass** der Anteil der Talkpartikel in dem zweiten Mineralstoff der zweiten Pigmentmischung mindestens 50 %, typischerweise > 90 % beträgt.

6. Verfahren nach Anspruch 5, **dadurch gekennzeichnet, dass** der zweite Mineralstoff hauptsächlich Talkpartikel mit einer Partikelgröße von < 40 µm umfaßt.

7. Verfahren nach Anspruch 6, **dadurch gekennzeichnet, dass** der zweite Mineralstoff mehr als 50 % an Talkpartikeln mit einer Partikelgröße von < 10 µm umfaßt.

8. Verfahren nach Anspruch 1, **dadurch gekennzeichnet, dass** das zweite Bindemittel
- ein Polymer ist, das als dessen Hauptbestandteile Styrol oder Butadien enthält,
- ein Polymer ist, das als dessen Hauptbestandteile Monomere enthält, die eine Acrylgruppe oder eine Allylgruppe enthalten und die zum Beispiel
- ein n-, iso- oder tert-Alkylester einer Acrylsäure oder einer Methacrylsäure sind, bei der die Alkylgruppe 1-20 Kohlenstoffatome umfaßt,
- ein Diester der Acrylsäure oder Methacrylsäure und Ethylenglycol oder Propylenglycol (als Quervernetzungsbestandteil) sind,
- Allyl-glycidyl-ether oder Diacetonacrylamid (als Quervernetzungsbestandteil) sind,
oder
- 2-Acrylamido-2-methylpropansulfonsäure (als ein Bestandteil zur Steigerung der Ionisierung) sind,
und dessen Monomere des weiteren Säuregruppen oder Estergruppen enthalten können oder Amide der Acrylsäure oder Methacrylsäure oder deren Derivate sein können
und/oder
- ein Polymer ist, das als dessen Hauptbestandteil Vinylestermonomere enthält, wie Vinylacetat, Vinylpropionat, Vinylbutyrat, Vinylbenzoat, Vinyl-2-ethylenhexanoat, Vinylstearat und Vinylester der Versatinsäure.

9. Verfahren nach Anspruch 1, **dadurch gekennzeichnet, dass** ein bioabbaubarer Stoff als das zweite Bindemittel verwendet wird, wobei die bioabbaubaren Bindemittel umfassen:
- Polymere, die auf Stärke, Milchsäure oder Polyhydroxybutyrat/-valerat basieren,
oder
- Polyester verschiedener organischer zweiwertiger oder dreiwertiger Säuren zusammen mit zweiwertigen oder mehrwertigen Alkoholen, wobei besagte Säuren zum Beispiel Adipinsäure, Maleinsäure und Zitronensäure beinhalten und die Alkohole zum Beispiel Ethylenglycol, Propylenglycol und Neopentylglycol und Pentaerythritol und Glycerol beinhalten.

10. Verfahren nach Anspruch 1, **dadurch gekennzeichnet, dass** der Anteil des ersten Mineralstoffs in der ersten Pigmentmischung 75-97 % beträgt, typischerweise 80-95 %.

11. Verfahren nach Anspruch 1, **dadurch gekennzeichnet, dass** die zweite Pigmentmischung eine derartige Menge an erster Pigmentmischung ersetzt, dass der Wassergrenzschichteffekt einer durch die Beschichtungszusammensetzung bereit gestellten Beschichtungsschicht mit einer Dicke von 5-8 g/m² genauso oder besser ist als der Wassergrenzschichteffekt, der durch eine lediglich durch die erste Pigmentmischung hergestellte Beschichtungsschicht mit einer Dicke von 10 g/m² bereitgestellt ist.

12. Verfahren nach Anspruch 1, **dadurch gekennzeichnet, dass** die Beschichtungszusammensetzung durch Mischen der zweiten Pigmentmischung in die erste Pigmentmischung, der ersten Pigmentmischung in die zweite Pigmentmischung oder durch abwechselndes Mischen jeder Pigmentmischung in ein gemeinsames Gefäß hergestellt wird.

13. Verfahren nach Anspruch 1, **dadurch gekennzeichnet, dass** die Pigmentmischungen zusammengemischt werden, indem weniger als 5 % Dispersionsmittel und/oder Stabilisierungsmittel verwendet wird.

## Revendications

1. Procédé de fabrication d'une composition de revêtement, dans laquelle fabrication
une première suspension de mélange de pigments, qui contient un matériau minéral, est préparée par mélange
- d'un premier matériau minéral, tel que le carbonate de calcium, le kaolin, le dioxyde de titane, le gypse, le talc et/ou un autre matériau correspondant utilisé en tant que pigment, et
- d'un premier agent de liaison, tel qu'un polymère synthétique, le latex et/ou un autre agent de liaison correspondant,
et
une deuxième suspension de mélange de pigments différente, qui contient un matériau minéral, est préparée par mélange
- d'au moins un second matériau minéral comprenant principalement des particules de talc et/ou d'autres particules de phyllosilicate et
- d'un deuxième agent de liaison
les premier et deuxième mélanges de pigments préparés ci-dessus étant combinés de manière à former la composition de revêtement.

2. Procédé selon la revendication 1, **caractérisé en ce que** les premier et deuxième mélanges de pigments sont mélangés ensemble de manière à former une composition de revêtement dans laquelle la proportion du deuxième mélange de pigments contenant un minéral dans la composition de revêtement est de 10 à 80 %, typiquement de 25 à 60 %.

3. Procédé selon la revendication 1, **caractérisé en ce que** les premier et deuxième mélanges de pigments sont mélangés ensemble de manière à former une composition de revêtement dans laquelle la proportion du deuxième matériau minéral dans le deuxième mélange de pigments est de 20 à 80 %, avantageusement de 30 à 70 %.

4. Procédé selon la revendication 1, **caractérisé en ce que** la proportion de particules de talc du matériau minéral dans la composition de revêtement finale, ou dans les premier et deuxième matériaux minéraux combinés, est d'au moins 10 à 70 %, typiquement de 20 à 60 %.

5. Procédé selon la revendication 1, **caractérisé en ce que** la proportion des particules de talc dans le deuxième matériau minéral du deuxième mélange de pigments est d'au moins 50 %, typiquement supérieur à 90 %.

6. Procédé selon la revendication 5, **caractérisé en ce que** le deuxième matériau minéral comprend principalement des particules de talc ayant une taille de particules inférieure à 40 µm.

7. Procédé selon la revendication 6, **caractérisé en ce que** le deuxième matériau minéral comprend plus de 50 % de particules de talc ayant une taille de particules inférieure à 10 µm.

8. Procédé selon la revendication 1, **caractérisé en ce que** le deuxième agent de liaison est
- un polymère, qui contient, en tant que ses principaux composants, du styrène ou du butadiène,
- un polymère, qui contient, en tant que ses principaux composants, des monomères, lesquels monomères contiennent un groupe acryle ou un groupe allyle, et sont, par exemple,
- un n-, iso- ou tert-alkyl ester d'acide acrylique ou d'acide méthacrylique, où le groupe alkyle comprend de 1 à 20 atomes de carbone,
- un diester d'acide acrylique ou d'acide méthacrylique et d'éthylène glycol ou de propylène glycol (en tant que composant de réticulation),
- un allylglycidyl éther ou un acrylamide de diacétone (en tant que composant de réticulation), ou
- l'acide 2-acrylamido-2-méthylpropane sulfonique (en tant qu'un composant faisant augmenter l'ionisation)
et ces monomères pouvant en outre contenir des groupes acides ou des groupes esters, ou pouvant être des amides de l'acide acrylique ou de l'acide méthacrylique, ou leurs dérivés
et/ou
- un polymère, qui contient, en tant que ses principaux composants, des monomères d'ester de vinyle, tels que l'acétate de vinyle, le propionate de vinyle, le butyrate de vinyle, le benzoate de vinyle, le vinyl-2-éthylène-hexanoate, le stéarate de vinyle et l'ester vinylique de l'acide versatinique.

9. Procédé selon la revendication 1, **caractérisé en ce qu'**un matériau biodégradable est utilisé en tant que deuxième agent de liaison, lesquels agents de liaison biodégradables comprennent
- des polymères à base d'amidon, d'acide lactique ou de polyhydroxibutyrate/valérate, ou
- des polyesters de différents di- ou tri- acides organiques conjointement à des alcools bivalents ou polyvalents, moyennant quoi lesdits acides comprennent, par exemple, l'acide adipinique, l'acide maléinique et l'acide citrique et les alcools comprennent, par exemple, l'éthylène glycol, le propylèneglycol, et le néopentyle glycol, et le pentaérythritol et le glycérol.

10. Procédé selon la revendication 1, **caractérisé en ce que** la proportion du premier matériau minéral dans le premier mélange de pigments est de 75 à 97 %, typiquement de 80 à 95 % ds.

11. Procédé selon la revendication 1, **caractérisé en ce que** le deuxième mélange de pigments remplace une quantité du premier mélange de pigments telle que l'effet de barrière à l'eau d'une couche de revêtement ayant une épaisseur de 5 à 8 g/m_ fourni par la composition de revêtement est le même ou meilleur que l'effet de barrière à l'eau fourni par une couche de revêtement ayant une épaisseur de 10 g/m_ formée uniquement par le premier mélange de pigments.

12. Procédé selon la revendication 1, **caractérisé en ce que** la composition de revêtement est fabriquée par mélange du deuxième mélange de pigments dans le premier mélange de pigments, du premier mélange de pigments dans le deuxième mélange de pigments, ou par mélange de chaque mélange de pigments à son tour dans une cuve commune.

13. Procédé selon la revendication 1, **caractérisé en ce que** les mélanges de pigments sont mélangés ensemble en utilisant moins de 5 % d'agents de dispersion et/ou de stabilisation.
